# EUROPEAN PATENT SPECIFICATION

(11) **EP 0 971 074 B1**
(45) Date of publication and mention of the grant of the patent: **10.10.2001**
(21) Application number: 99203137.7
(22) Date of filing: 09.04.1997
(51) Int. Cl.: E01C 21/02, E01C 7/06, C04B 20/06

(54) **A method for producing ceramic products in the form of earth building layers or prefabricated building elements**
Verfahren zur Herstellung von keramischen Produkten in Form von Bauschichten aus Erde oder vorgefertigten Bauelementen
Procédé et appareil de fabrication de produits céramique sous forme de couches de construction du sol ou éléments de construction préfabriqués

(30) Priority: 09.04.1996 FI 961555
(43) Date of publication of application: 12.01.2000
(62) Divisional of application: 97915506.6
(73) Proprietor: Nobar Oy, 45700 Kuusankoski (FI)
(72) Inventor: Ryynänen, Seppo, 45700 Kuusankoski (FI); Kasittula, Erkki Nikolai, 39590 Tevaniemi (FI)
(74) Representative: LEITZINGER OY

(56) References cited:
- EP-A- 0 231 998
- DE-A- 2 149 727
- FR-A- 1 347 882
- US-A- 3 372 626
- US-A- 3 973 973
- US-A- 4 238 242

## Description

The present invention relates to a method for producing ceramic products in the form of earth building layers or prefabricated building elements, the method comprising the steps of transporting a mobile heating chamber to a site of production, heating clay containing earth material in said heating chamber to convert it to ceramic material for building the ceramic product and transporting and/or applying the ceramic material to a site of use of the earth building layer or into a mold of the building element.

The use of ceramic products, made of porous discrete pellets, is known as such, since for decades there have been facilities available, wherein a rotating drum is used for heating fine material, e.g. clay, for expanding the same. This results in pellet-like grains, which are lightweight and have a high thermal insulation capacity. The surface of hot pellets expanded in the rotating drum often becomes hard, i.e. the surface sinters into a strength-enhancing crust. The same method has been used to manufacture foam glass or vitreous products, the raw material comprising e.g. fine clay, fly ash and other finely powdered minerals. The subject matter has been discussed in several of patents, examples of which are the following patent publications FI-A-50105, FI-A-54910, FI-A-56368, FI-A-56520, FI-A-65416, FI-A-55326, US-A-2,987,411, US-A-2,948,948, US-A-2,611,712, US-A-4,584,280, US-A-3,170,870, US-A-3,325,264, US-A-2,611,712, and US-A-3,973,973. The expansion is often assisted by using various chemical additives, which have been described in the above-cited patent publications.

In this application, the ceramic building product is produced of thermally expanded fine material, mainly of clay containing earth material, which contains finely powdered waste, but may contain also additional filling such as fly ash, fine sand as well as various combinations thereof.

In the prior art the porous ceramic pellets are generally manufactured far away from the site of using the product. Transportation of expanded pellets to the site of use claims a lot of space and incurs high costs of transport. The resulting product comprises expanded pellets or grains which are discrete, not bound to each other. Thus, the resulting mass has no tensile strength and even the compression strength often remains insufficient. The bending strength of the product is also non-existent. Therefore, the available technology requires that tensile strength be increased artificially by means of various strengtheners, e.g. geostiffeners or reinforcement. As a result, using the product will be complicated and expensive. A ceramic product, e.g. haydite, manufactured with existing technology, is also highly fragile during the course of loading and transport.

As a result of the inconveniences and expenses involved in existing technology, several preferred applications for ceramic products remain unexploited.

FR-A-1 347 882 shows a method as defined in the preamble of claim 1, as far as the alternative of producing earth building layers is concerned. This reference proposes heating temperature of 300-500°C which is far too low to swell the possible clay to porous ceramic product. Burning of the organic material is obtained. The reference teaches that the raw material is obtained directly and systematically from the road track as the machine advances. The road tracks, however, do not systematically contain clay and finely powdered waste material to be cleared off.

US-A-3 372 626 shows a method and machine using sand as raw material, thereby producing very heavy vitreous layer without any porous ceramics to lighten the specific weight of the layer.

DE-A-2 149 727 relates to swelling of clay to porous light weight pellets for use as filling material in concrete. There is no teaching of use of the raw material which contains finely powdered waste material to be cleared off from its original site. The heating chamber has no transport apparatus and therefore the heating chamber is not mobile.

EP-A-0 231 998 shows manufacturing of building materials and building elements of ceramic pellets having vitreous surfaces for stitching the pellets together. The temperature for formation of the pellets is not mentioned. There is no teaching of use of the raw material which contains finely powdered waste material to be cleared off from its original site. The heating chamber has no transport apparatus and therefore the heating chamber is not mobile.

An object of this invention is to provide a method for producing earth building layers or prefabricated building elements by a mobile production machine at any desired production site by using raw materials, which contains finely powdered waste material to be cleared off from its original site. This is achieved by means of a method of the invention according to the features of annexed claim 1.

The accompanying figures are only intended as examples and to illustrate a way of practicing the invention.
- Fig. 1: shows a traditional road structure with its heavy embankments.
- Fig. 2: shows the road structure of fig. 1 depressed on poorly supporting subsoil.
- Fig. 3: shows a lengthwise section of one mobile ceramic-products manufacturing apparatus in operation.
- Fig. 4: shows a mobile apparatus in a side view.
- Fig. 5: shows one mobile apparatus with the apparatus moving on top of its own product.
- Fig. 6: shows one mobile apparatus in operation, wherein the end product is created in a plurality of layers.
- Fig. 7: shows one possible cross-section of the apparatus of fig. 3.
- Fig. 8: shows one mobile apparatus, wherein the ceramic product is delivered pneumatically further away from the ceramic-products manufacturing apparatus.
- Fig. 9: shows a lengthwise section of one solution, wherein a railway structure has been lifted up and the ceramic composition is laid therebelow e.g. as thermal insulation.
- Fig. 10: shows a bottom view of one possible solution, wherein prefabricated elements are produced with a method of the invention.
- Fig. 11: shows a cross-section of a prefabricated element after a mobile ceramic-mass spreading apparatus has passed over element moulds and spread the ceramic mass on top of the moulds while traveling on rails.
- Fig. 12: shows one alternative arrangement in the same section as fig. 11 with a concrete layer beneath the ceramic product for the surface of an element.
- Fig. 13: shows one solution, wherein a mobile apparatus of the invention travels on wheels.
- Fig. 14: shows a lengthwise section of one solution, wherein the ceramic composition is laid on top of a floating pontoon.
- Fig. 15: shows a cross-section of the solution of fig. 14, wherein the pontoon unit and the ceramic product can be joined together as a composite structure.
- Fig. 16: shows one bridge structure in a lengthwise section.
- Fig. 17: is a sectional view of one ceramic pellet, wherein the coarser matter is on the surface and the porous, lightweight matter is in the middle.
- Fig. 18: shows a mobile apparatus, wherein a heating chamber is supplied with a coarser material, e.g. fine sand, to the hottest spot in which the coarser material melts.
- Fig. 19: is a sectional view of one ceramic pellet, wherein the middle portion consists of a porous lightweight material and on top of that lies an outermost layer of melted coarser material, e.g. fine sand.
- Fig. 20: shows a plurality of ceramic pellets of fig. 19 conglutinated together for providing a very solid ceramic composition aggregate, which also has a high tensile strength.
- Fig. 21: shows a road structure in a plurality of layers. The top layer is constructed from a material with a high tensile strength, e.g. as illustrated in fig. 20. The lower placed ceramic layers can be readily penetrated , e.g. for making a culvert conduit 36. The solid top layer may remain e.g. as a culvert cover 35.
- Fig. 22: shows one possible solution for supplying a finely powdered raw material 2 to an apparatus by means of a pump 37 submersible in clay.
- Fig. 23: shows the condition of fig. 22 after the pump has sucked finely powdered clay from deep, whereby the ground sinks but no major damages are visible on the surface. The top clay layer may remain practically intact.
- Fig. 24: shows an axonometric view of a solution, wherein a finely powdered material has been delivered into a grate-floored 41 container 42 for drying the same. Delivery of the finely powdered raw material can be effected e.g. by using the solution of fig. 22 and even a long-distance pipeline.

An essential object of this invention is to produce preferably even large amounts of ceramic material at or near the site of application. At the same time, an object is to produce a ceramic product which is more solid than those of the prior art. A particular object is to increase the compression strength, but also the tensile and bending strength without separate reinforcements.

The invention can be readily used for implementing even major construction projects in such a manner that the actual composition is not produced until at the site. There is no need to move about heavy elements or other major components. The work can be sufficiently handled by relatively simple equipment.

If desired, the final composition can be composed of various layers for thus providing the product with desired qualities.

The exemplary figures depicting the invention include the following illustrative reference numerals:
1 heating chamber used for expansion
2 finely powdered raw material
3 road structure
4 base
5 fuel
6 fire produced by combustion of fuel
7 transport means, e.g. crawler
8 ceramic product
9 expanded ceramic product or ceramic pellet
10 outlet for combustion gases
11 heat recovery duct
12 heat exchanger
13 axle
14 tipping piston
15 screw feeder
16 ceramic product smoothing skirt
17 heat recovery chamber from ceramic product
18 support wheel
19 railway structure
20 supply of compressed air
21 ceramic product conveying duct
22 element moulds seen from above
23 rail for a transport base
24 concrete bed for pouring ceramic mass thereon
25 wheel for carrying a machine
26 water level
27 pontoon
28 bridge pier
29 finely-powdered expanded matter in the middle of a pellet
30 coarser-grained matter in the surface part of a pellet
31 hottest point
32 supply of fine sand
33 preheating of fine sand
34 melted fine sand
35 solid tensile-resistant ceramic layer
36 culvert conduit
37 pump
38 lifting pipe for raw material, e.g. clay
39 hole in wet finely-powdered raw material, e.g. clay
40 discharging water
41 floor grate
42 container
43 pedestal
44 supply duct for additive or supply duct for raw material

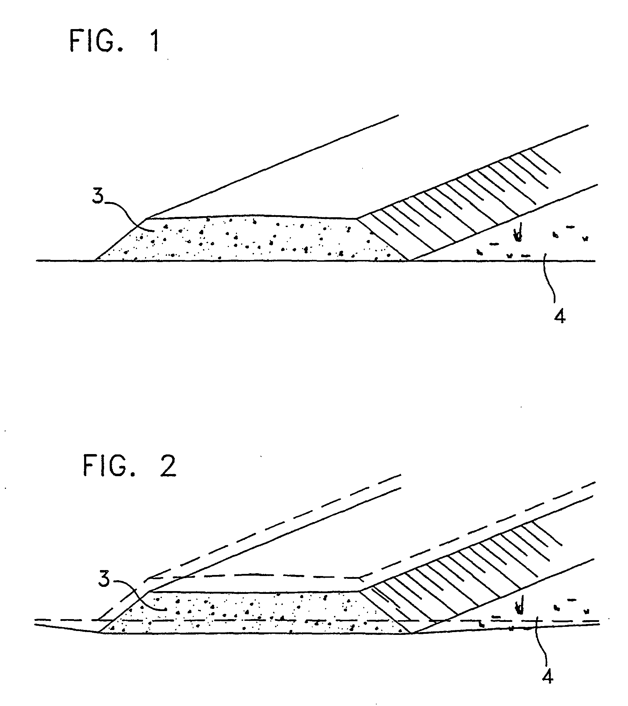

In fig. 1, a traditional road embankment 3 requires a lot of aggregates. This generally requires the excavation of a lot of sand, which ruins the nature in some area. Useful aggregate is not available at all in many regions or the price is excessively high. The normally employed filling gravel or sand has no tensile strength to mention. Therefore, the road structure 3 must be given a substantial thickness in order to exploit the compression strength of the material. Especially important, in terms of the durability of a road, are top layers, wherein major single loads must be distributed over a more extensive area in the road structure 3. For this purpose, as a so-called base course, the road generally includes crushed coarse-grained macadam or rubble, which is expensive. Thus, the loading progresses as compressive forces from one rubble grain to another. The diffusion of pressure within the road bed 3 occurs deficiently as the material has no worth-while bending or tensile strength. Generally, it is only the asphalt topping or concrete pavement which have a little bending strength. If the structural layers could be made of flexurally resistant materials, it would be sufficient to use substantially thinner layers. The same applies also to airports, harbours, courtyards and like areas, which require a bearing capacity for major loads.

In fig. 2, the embankment 3 is built on a soft subsoil 4 and sinks down. In order to prevent this, it is often necessary to undertake expensive ground reinforcements, e.g. piling, stabilizing etc., as the weight of a traditional road embankment is about 1,9...2,3 tons/m³. If the building material for an embankment were more lightweight, it would be possible to eliminate the irregular depressions of roads and airports and degrading conditions for traffic. For example, a depressed bumpy road causes damages on transport equipment and cargos as well as makes traveling unpleasant in passenger traffic. The bumpiness of roads is currently further increased by frost heaves in winter. This would be precluded if the aggregate were thermally insulating.

In present technology, the site of a road bed must often be cleared of poorly supporting materials, e.g. clay. It is necessary to find suitable landfills for these waste materials and a possible waste tax must be paid therefor. This waste stuff can often be put to sensible use with a method of the invention by converting it into a ceramic product 8.

In present technology, the construction of a road involves an excessive consumption of energy since, for example, every excavating machine and earth carrying vehicle and such pieces of equipment spend a lot of fuel in a variety of actions. An object of the novel approach is to substantially simplify the entire road building process and thus to reduce the overall consumption of energy.

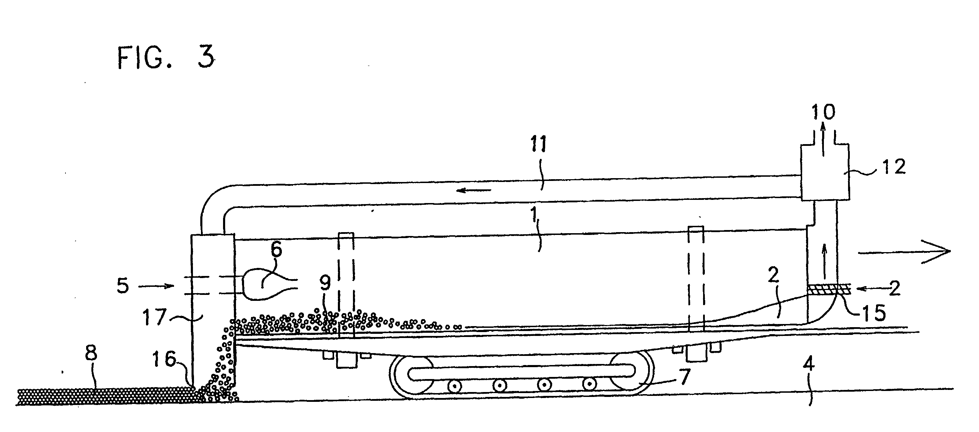

In fig. 3, an apparatus produces ceramic material in large quantities quickly and directly on site. This eliminates the expensive excavations of embankment material as well as transport costs.

A fine raw material 2 is introduced into a heating drum 1 e.g. by means of a screw feeder 15. Being heated by a combustion flame 6, the finely powdered material 2 expands into discrete ceramic pieces 9, which provide the final ceramic composition, e.g. a road bed. This is lightweight and has a high heat-insulating capacity.

In this instance, the apparatus is mobile on crawlers 7. A fuel 5 used for combustion may comprise e.g. coal dust, which is delivered into the drum 1. A supporting flame is sustained by means of oil. A heat exchange 12 recovers thermal energy from exhaust gases. The required clean air is heated with exhaust gases.

The ceramic product is smoothed or levelled by means of a smoothing skirt or smoothing face 16 to a desired condition. In order to conserve energy, the product discharges from the drum 1 or some other heating chamber into a heat recovery chamber 17. In the illustrated case, the apparatus travels to the right. The distributed ceramic layer 8 may have a thickness which generally varies within the range of 5 - 100 cm.

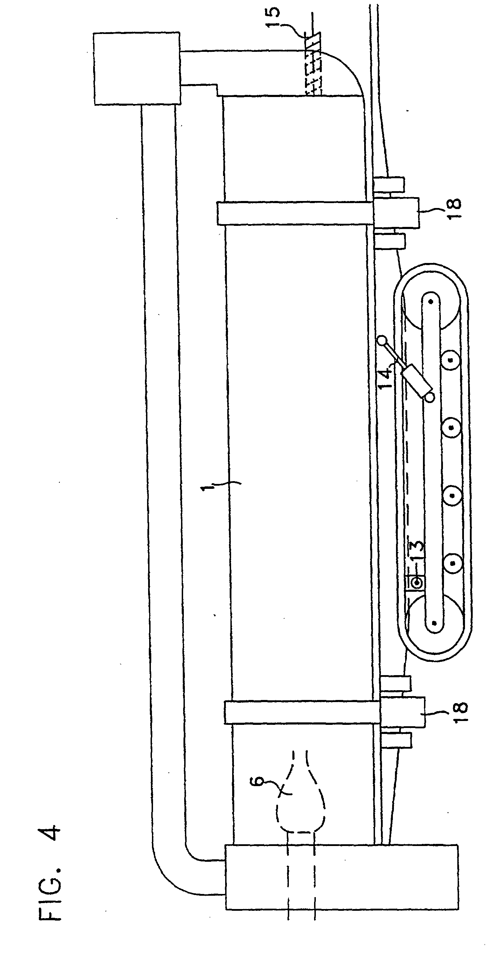

Fig. 4 depicts a piston cylinder 14 intended for tipping the drum 1 and capable of adjusting the tilt angle of the drum in longitudinal direction or regulating the rate of output. The tipping may occur e.g. around an axle 13.

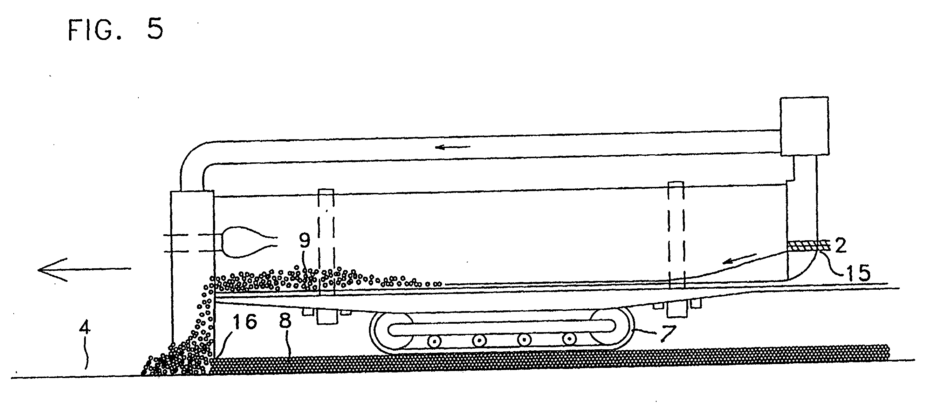

In fig. 5, the smoothing skirt 16 is moved to such a height that the apparatus is able to travel on top of its own product.

Due to the hot mass, the crawlers 7 must be durable. If necessary, the crawler tracks can be overlaid with a heat-resistant smoothing mat or plate elements in order not to leave track impressions on the surface being produced.

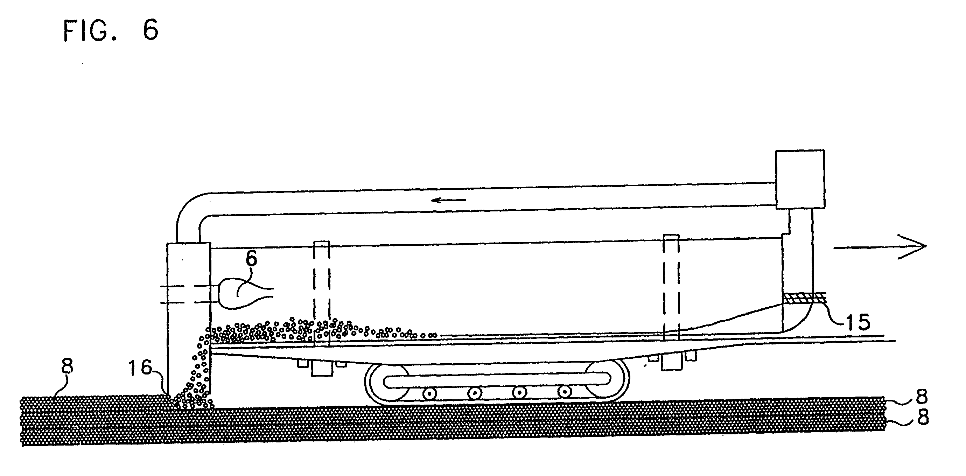

It can be noted from fig. 6 that, by spreading ceramic layers on top of each other, the invention can be used for producing large quantities of materials e.g. for applications of information technology, airports, harbour areas, courtyards etc.

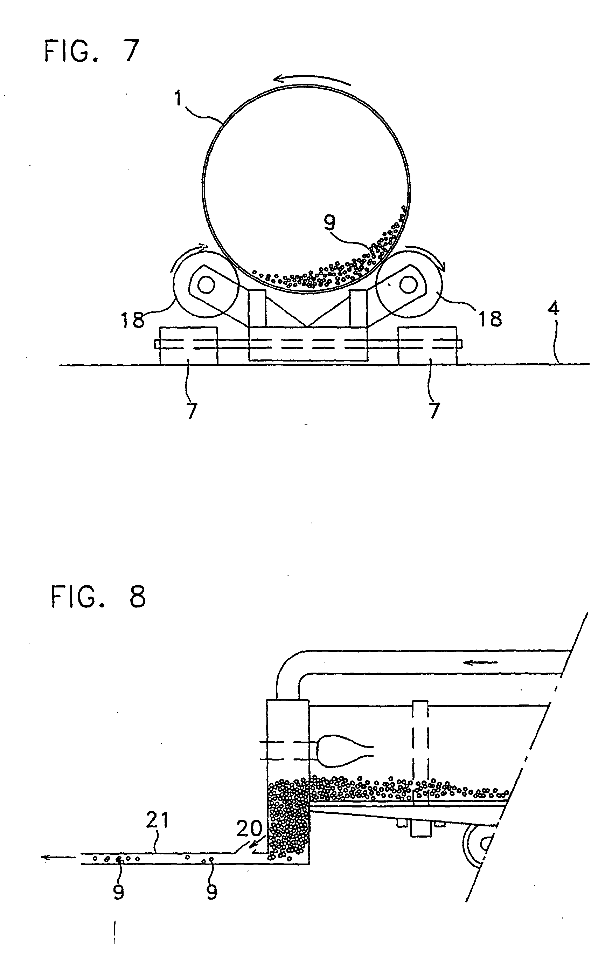

Fig. 7 illustrates rotation of the drum 1 and the positioning of a ceramic product 9 or, in this case, discrete grains or pellets.

Fig. 8 depicts how the discrete ceramic grains 9 can also be carried by means of pneumatic delivery 21 further away from the apparatus even along long-distance ducts 21.

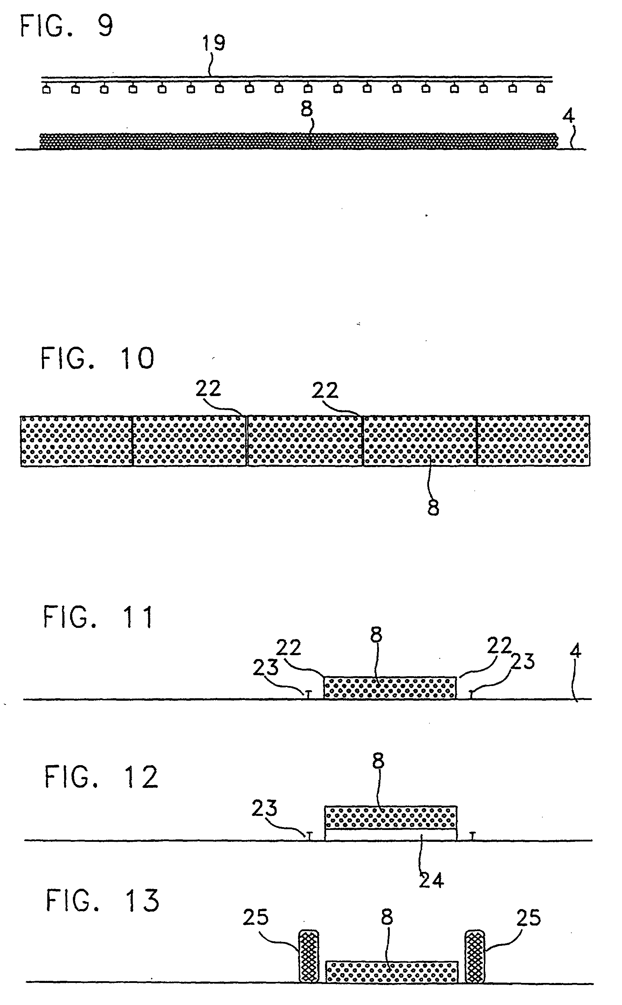

Fig. 9 shows that, by hoisting up a track 19, it is possible to lay therebelow a ceramic layer 8, e.g. by means of pneumatic delivery as shown in fig. 8. The apparatus itself can be placed above the track slightly aside thereof. After setting the track down, the ceramic mass can also be poured into the spaces between concrete blocks and damaged blocks can be repaired by means of the ceramic mass by turning the mass and the blocks into a composite structure.

Fig. 10 shows that the invention can be used for making ' rapidly and effectively e.g. prefabricated elements by placing moulds 22 on some base, e.g. on the ground. The apparatus may advance over the moulds 22 and fill the same with a ceramic mass. Figs. 11 and 12 illustrate rails 23 for maneuvering the apparatus over the moulds, and fig. 13 shows how the apparatus is movable on wheels 25. In fig. 12, the ceramic mass 8 is spread on top of a concrete slab 24 as a composite structure with the concrete.

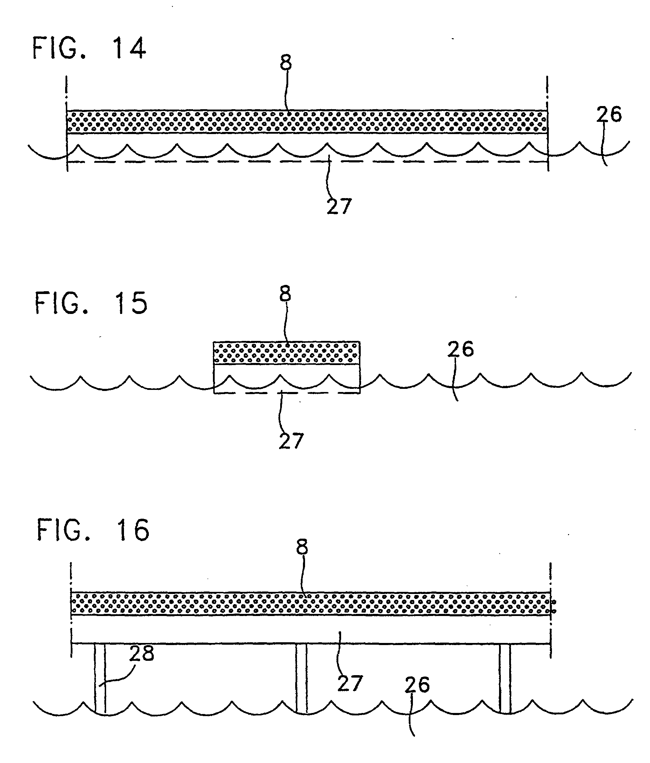

Figs. 14-16 depict a ceramic porous slab 8 as a composite structure on top of a floating pontoon 27 to provide a bridge deck. the bridge structure is hoisted up and supported with piers as necessary.

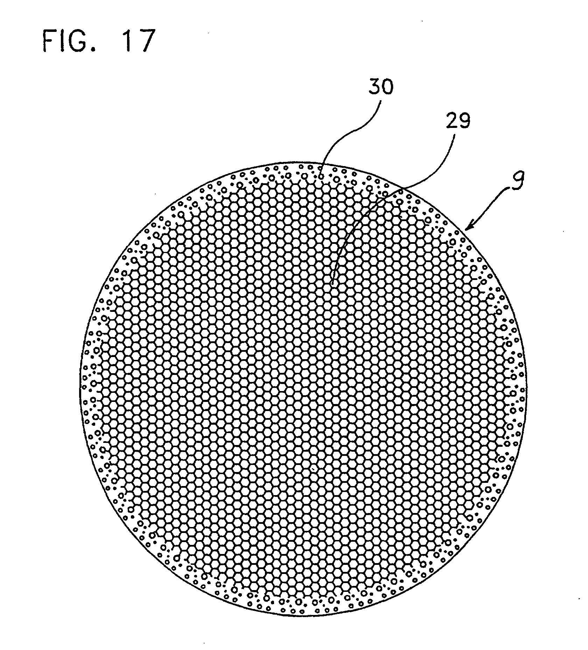

Fig. 16 illustrates in principle a way of constructing even a major bridge upon piers 28.

Fig. 17 shows what is the result when two different types of clay have been mixed together prior to making a ceramic product, often even in a wet condition. The coarser particles find their way to the outer surface in a pellet during firing to build a solid and hard outer crust 30. The finer expanding matter provides a lightweight core layer 29. By raising the oven temperature the ceramic product can be extracted as conglutinated pellets or a foam-like mass. The oven temperature is within the range of 800 - 1300°C.

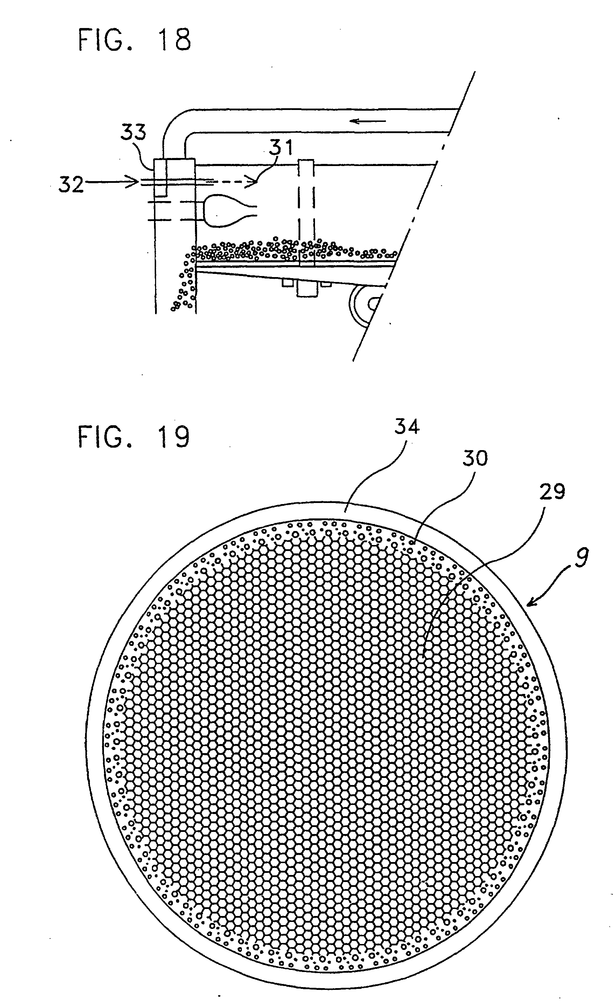

In fig. 18, the drum 1 is supplied with fine sand (principal grain size < 0,02 mm) 32 or some other material coarser than clay delivered to a hottest drum point 31 , wherein the coarser matter 32 melts.

Fig. 19 depicts a small ceramic grain or pellet 9, on whose surface is melted a vitreous material 34 from sand or some other coarser material.

The pellets according to figures 17 and 19 have particular advantages when used as an aggregate in beton instead of stone aggregate. The cement is not impregnated in the pellets through the hard or vitreous surface. The compression strength of the pellets is much better than with any prior known pellets. The result is durable but light beton.

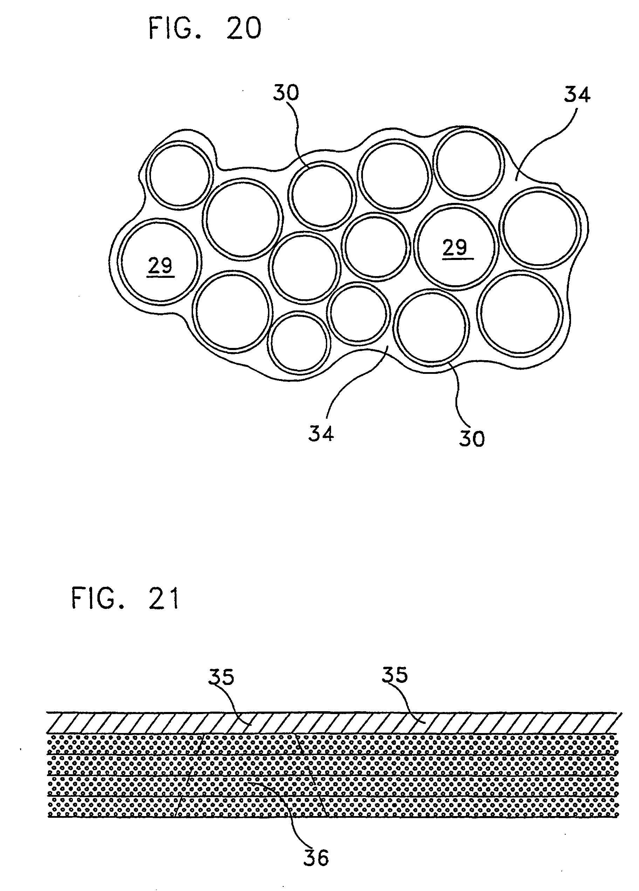

According to fig. 20, discrete grains 9, 30, 29 adhere to each other through the action of the melted sand 34. After the heat has decreased, the composition is extremely solid and resistant to tension and bending. Thus, the ceramic composition is foamy or spongy and the pore surfaces or partitions are glazed by fine sand melted by the flame. By virtue of this, the strength will be enhanced even further. If desired, the above-described compositions need not be provided with conventional reinforcements. Water is not able to penetrate into a solid cellular structure and, thus, there is no freezing hazard.

Despite its strength the ceramic product weighs no more than 0,15- 1,8 tn/m³. Especially in road construction, the light weight provides a major benefit as the product does not burden the subsoil by its own weight, whereby the ground reinforcements can be eliminated even completely. In the road surface layer and or in the underlying layers the ceramic slab is reinforced by vitreous material which is integral with the expanded porous ceramic material. At the site of road construction, the clearing of even a thin natural soil layer is sufficient to compensate for the total weight of a road.

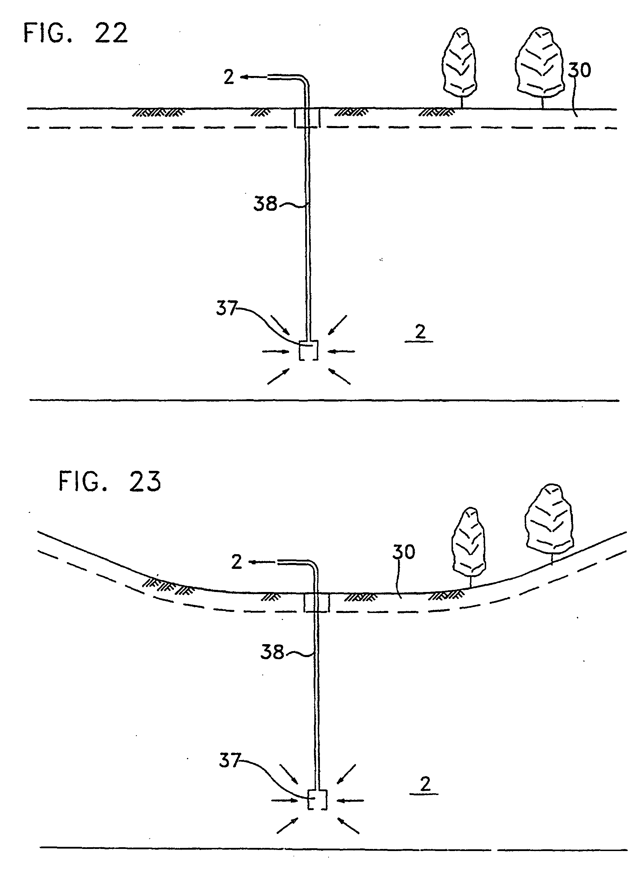

In figs. 22 and 23, a pump 37 is buried in the finer clay material 2 and a supply duct 38 is passed through the coarser clay layer 30.

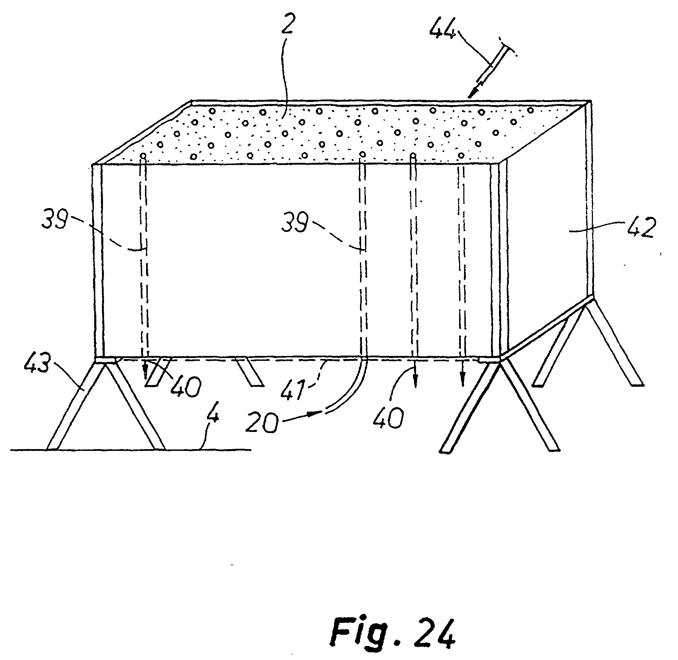

Fig. 24 illustrates an arrangement for presetting the clay prior to introducing it into the oven. The clay contained in a container 42 is provided with water draining passages 39 by blowing compressed air through a duct 20 or by designing the passages in such a manner that the mass is laid around rods and the rods are extracted from the mass after a given period of setting. The container 42 is placed on pedestals 43 and water 40 drains through a grate floor 41. The clay can be supplied with necessary additives (duct 44), e.g. iron oxide, salts, metals or other prior known additives, which are discussed in the above-cited patent publications.

If setting of the mass needs to be decelerated, the mass emerging from the oven can be supplied with chemicals (e.g. various salts), which lower the melting temperature. Hence, even after the spreading, the mass surface can be rolled, for example, or dug to form e.g. cable passages.

In an embodiment one or more ceramic layers, having its or their specific weight less than 1,0 tn/m³, form a floating road. Due to vitreous reinforcement material within the porous mass, high strength is combined with light weight. Typically the specific weight of the floating road slab or different layers of the slab may vary between 0,2 - 0,9 tn/m³.

## Claims

1. A method for producing ceramic products in the form of earth building layers (8) or prefabricated building elements (8'), the method comprising the steps of transporting a mobile heating chamber (1) to a site of production, heating clay containing earth material in said heating chamber (1) to convert it to ceramic material (9, 29, 30, 34) for building the ceramic product (8, 8') and transporting and/or applying the ceramic material to a site of use of the earth building layer or into a mold of the building element, **characterized in that** the clay containing earth material contains finely powdered waste material to be cleared off from its original site, the waste and clay containing earth material being converted to said ceramic building material (9, 29, 30, 34) in the mobile heating chamber (1) at the temperature of 800 - 1300 °C which is maintained by burning fuel in the heating chamber (1) when rotating the drum like heating chamber .

2. A method according to claim 1, **characterized in that** the amount of clay in the earth material and the heating temperature are high enough to swell the material during the conversion to such a porosity that the ceramic material (9, 29, 30, 34) delivered from the heating chamber (1) is in the form of conglutinated pellets or foam-like mass and has a specific weight of 0,15 - 1,8 tn/m³.

3. A method according to claim 1 or 2, **characterized in that** finely powdered sand (32) is blasted to the hot end of the heating chamber (1).

## Patentansprüche

1. Verfahren zum Erzeugen keramischer Produkte in Form von Erdbauschichten (8) oder vorgefertigter Bauelemente (8'), mit den Schritten des Transportierens einer mobilen Heizkammer (1) zu einem Produktionsort, des Erhitzens von lehmhaltigem Erdmaterial in der Heizkammer (1), um es in keramisches Material (9, 29, 30, 34) zum Bauen des keramischen Produktes (8, 8') umzuwandeln, und Transportieren und/oder Anbringen des keramischen Materials an einem Ort der Verwendung der Erdbauschicht oder in einer Form des Bauelements, **dadurch gekennzeichnet, dass** das lehmhaltige Erdmaterial fein pulverisiertes, von seinem ursprünglichen Ort zu beseitigendes Abfallmaterial enthält, **dass** das Abfallmaterial und das lehmhaltige Erdmaterial in der mobilen Heizkammer (1) in das keramische Baumaterial (9, 29, 30, 34) bei einer Temperatur von 800 bis 1300°C umgewandelt werden, die durch Verbrennen von Brennstoff in der Heizkammer (1) unter Drehung der trommelartigen Heizkammer aufrechterhalten wird.

2. Verfahren nach Anspruch 1, **dadurch gekennzeichnet, dass** die Menge an Lehm in dem Erdmaterial und die Heiztemperatur hoch genug sind, um das Material während der Umwandlung auf eine solche Porosität zu blähen, **dass** das von der Heizkammer (1) ausgegebene Keramikmaterial (9, 29, 30, 34) die Form von zusammengebackenen Perlen oder einer schaumartigen Masse hat und ein spezifisches Gewicht von 0,15 bis 1,8 t/m3 aufweist.

3. Verfahren nach Anspruch 1 oder 2, **dadurch gekennzeichnet, dass** fein pulverisierter Sand (32) in das heiße Ende der Heizkammer (1) geblasen wird.

## Revendications

1. Procédé de fabrication de produits céramique sous forme de couches de construction du sol (8) ou d'éléments de construction préfabriqués (8'), le procédé comprenant les étapes consistant à transporter une chambre de chauffe (1) mobile sur un site de production, à chauffer le matériau terreux contenant de l'argile dans ladite chambre de chauffe (1) pour le convertir en matériau céramique (9, 29, 30, 34) pour construire le produit céramique (8, 8') et à transporter et / ou appliquer le matériau céramique sur un site d'utilisation de la couche de construction du sol ou dans un moule de l'élément de construction, **caractérisé en ce que** le matériau terreux contenant de l'argile contient des déchets de matériaux finement pulvérisés à évacuer du site original, les déchets de matériaux et le matériau terreux contenant de l'argile étant convertis en ledit matériau de construction céramique (9, 29, 30, 34) dans la chambre de chauffe (1) mobile à la température de 800 - 1300 °C qui est maintenue en brûlant le combustible dans la chambre de chauffe (1) quand la chambre de chauffe semblable à un tambour tourne.

2. Procédé selon la revendication 1, **caractérisé en ce que** la quantité d'argile dans le matériau terreux et la température de chauffe sont suffisamment élevées pour gonfler le matériau pendant la conversion jusqu'à atteindre une porosité telle que le matériau céramique (9, 29, 30, 34) déchargé de la chambre de chauffe (1) a la forme de pastilles conglutinées ou d'une masse semblable à de la mousse et a un poids spécifique de 0,15 - 1,8 tn/m³.

3. Procédé selon la revendication 1 ou 2, **caractérisé en ce que** le sable (32) en poudre fine est soufflé vers l'extrémité chaude de la chambre de chauffe (1).
